# EUROPÄISCHE PATENTSCHRIFT

(11) **EP 2 965 142 B1**
(45) Veröffentlichungstag und Bekanntmachung des Hinweises auf die Patenterteilung: **10.04.2019**
(21) Anmeldenummer: 14706619.5
(22) Anmeldetag: 26.02.2014
(51) Int. Cl.: G02B 27/01, G01C 21/36

(54) **VERFAHREN UND VORRICHTUNG ZUM BETREIBEN EINER ANZEIGEVORRICHTUNG**
METHOD AND DEVICE FOR OPERATING A DISPLAY DEVICE
PROCÉDÉ ET DISPOSITIF DE COMMANDE D'UN DISPOSITIF D'AFFICHAGE

(30) Priorität: 05.03.2013 DE 102013203679
(43) Veröffentlichungstag der Anmeldung: 13.01.2016
(73) Patentinhaber: Bayerische Motoren Werke Aktiengesellschaft, 80809 München (DE)
(72) Erfinder: RIEBE, Mark, 85402 Kranzberg (DE); SCHWAB, Axel, 80538 München (DE); BUCHNER, Alexander, 80997 München (DE)
(86) Internationale Anmeldenummer: PCT/EP2014/053699
(87) Internationale Veröffentlichungsnummer: WO 2014/135410

(56) Entgegenhaltungen:
- EP-A2- 0 477 149
- DE-A1-102007 035 505
- DE-A1-102010 001 442
- US-A1- 2002 080 495
- Robert B Wood ET AL: "Head-Up Displays", The Avionics Handbook, 20. Dezember 2000 (2000-12-20), XP055113091, Gefunden im Internet: URL:http://www.davi.ws/avionics/TheAvionic sHandbook_Cap_4.pdf [gefunden am 2014-04-09]

## Beschreibung

Die Erfindung betrifft ein Verfahren und eine Vorrichtung zum Betreiben einer Anzeigevorrichtung eines Fahrzeugs.

Moderne Fahrzeuge weisen heutzutage häufig sowohl eine Headup-Display-Einheit als auch ein Kombiinstrument und/oder eine zentrale Anzeigeeinheit auf, auf denen verschiedene Informationen visuell für einen Fahrzeugführer zur Verfügung gestellt werden.

In der Veröffentlichung Robert B Wood ET AL, "Head-up Displays", The Avionics Handbook, 20. Dezember 2000, abgerufen im Internet am 9. April 2014, werden im Kapitel 4 Grundlagen von Head-up Displays, optische Konfigurationen sowie Anwendungen und Beispiele erläutert.

Die Druckschrift DE 10 2010 001 442 A1 offenbart ein Head-up-Display-System für ein Fahrzeug, insbesondere Kraftfahrzeug, zum Projizieren von Informationen in das Sichtfeld eines Fahrers des Fahrzeugs, mit wenigstens einer die Informationen durch Lichtstrahlen bereitstellenden Bildgebereinheit und mit mindestens einer die Lichtstrahlen auf eine Projektionsfläche, insbesondere Windschutzscheibe, leitenden Optikeinheit. Es ist eine Einrichtung zum Ausrichten der Lichtstrahlen auf der Projektionsfläche in Abhängigkeit von der Position des Kopfes des Fahrers vorgesehen, wobei die Einrichtung wenigstens einen kapazitiven Sensor zum Bestimmen der Position des Kopfes umfasst. Ferner betrifft die Erfindung ein Verfahren zum Betreiben eines Head-up-Display-Systems.

Die Druckschrift EP 0 477 149 A2 offenbart ein Head-up Display zur Anzeige von visuellen Informationen außerhalb der Windschutzscheibe.

Die Druckschrift US 2002/080495 A1 offenbart ein Verfahren und eine Vorrichtung zur Verringerung der Verzerrung in einem angezeigten Bild, beispielsweise durch die Windschutzscheibe.

Die Druckschrift DE 102007035505 A1 beschreibt ein Kraftfahrzeug mit einem Head-Up-Display zum Anzeigen von Informationen, wobei die durch das Head-Up-Display angezeigten Informationen aus einem Raumelement innerhalb des Kraftfahrzeuges sichtbar sind, mit einer Verstelleinrichtung zum Verstellen der Position des Raumelementes mit einer Erfassungseinrichtung zum Erfassen der Position der Augen oder des Kopfes eines Fahrers des Kraftfahrzeuges, mit einer Steuereinrichtung, die derart eingerichtet und mit der Verstelleinrichtung und der Erfassungseinrichtung gekoppelt ist, dass die Position des Raumelementes in Abhängigkeit von der erfassten Position der Augen oder des Kopfes eines Fahrers verstellt wird.

Die Aufgabe, die der Erfindung zugrunde liegt, ist es, einerseits ein Verfahren und andererseits eine Vorrichtung zum Betreiben einer Anzeigevorrichtung eines Fahrzeugs zu schaffen, das beziehungsweise die dazu beiträgt, dass die visuelle Signalisierung der Anzeigevorrichtung an einen Fahrzeugführer angepasst wird.

Die Aufgabe wird gelöst durch die Merkmale der unabhängigen Patentansprüche. Vorteilhafte Ausgestaltungen der Erfindung sind in den Unteransprüchen gekennzeichnet.

Gemäß einem ersten Aspekt zeichnet sich die Erfindung aus einerseits durch ein Verfahren und andererseits durch eine korrespondierende Vorrichtung zum Betreiben einer Anzeigevorrichtung eines Fahrzeugs. Die Anzeigevorrichtung weist eine Headup-Display-Einheit auf, wobei die Headup-Display-Einheit eine bilderzeugende Einheit und ein optisches System aufweist, wobei mittels der bilderzeugenden Einheit ein Bild erzeugt wird und in das optische System eingestrahlt und entlang eines optischen Strahlengangs weitergeleitet wird und der optische Strahlengang des erzeugten Bildes in einem Bereich auf die Frontscheibe auftrifft, so dass ein virtuelles Bild erzeugt wird, das aus einem vorgegebenen Sichtfenster für einen Fahrzeugführer sichtbar ist. In dem vorgegebenen Sichtfenster wird eine Anzahl von Augen eines Fahrzeugführers detektiert. Abhängig von der detektierten Anzahl von Augen wird ein Signalisierungssignal erzeugt zum Erzeugen des Bildes; wobei, falls genau ein Auge in dem Sichtfenster detektiert wurde, das Signalisierungssignal derart erzeugt wird, dass eine Höhe und/oder Breite des erzeugten Bildes kleiner ist als bei einer Detektion von zwei Augen in dem Sichtfenster.

Auf diese Weise kann bei dem Erzeugen des Bildes, das aus dem vorgegebenen Sichtfenster auf einer Frontscheibe des Fahrzeugs für einen Fahrzeugführer als virtuelles Bild sichtbar ist, berücksichtigt werden, ob der Fahrzeugführer mit beiden Augen und/oder mit einem Auge und/oder mit keinem Auge in dem vorgegebenen Sichtfenster ist. So kann das Bild je nach Situation, wie viele Augen detektiert wurden, an den Fahrzeugführer angepasst werden.

In einem Randbereich des virtuellen Bildes kann es gegebenenfalls durch die Bilderzeugung zu Störungen in der Wahrnehmung kommen, falls das virtuelle Bild nur von einem Auge sichtbar ist. Sind beide Augen in dem Sichtfenster kommt es gegebenenfalls zu keinen Störungen. Indem nun die Augenanzahl in dem Sichtfenster ermittelt wird, kann der Bereich, in dem es zu Störungen kommen kann, zur Signalisierung genutzt werden, falls zwei Augen detektiert werden und nicht genutzt werden, falls nur ein Auge detektiert wird. Auf diese Weise kann in dem Fall, dass beide Augen in dem Sichtfenster detektiert werden, eine besonders große Fläche des virtuellen Bildes genutzt werden.

Gemäß einer weiteren vorteilhaften Ausgestaltung wird, falls genau ein Auge in dem Sichtfenster detektiert wird, zusätzlich ermittelt, ob das linke oder das rechte Auge detektiert wurde, und das Signalisierungssignal wird zusätzlich abhängig davon erzeugt, ob das linke oder das rechte Auge detektiert wurde.

Hierdurch kann die zusätzliche Information, welches Auge im . Sichtfenster detektiert wurde, genutzt werden, um das Signalisierungssignal zu erzeugen. So kann beispielsweise zusätzlich ein linker und/oder ein rechter Randbereich des erzeugten Bildes zur Signalisierung genutzt werden, falls das rechte und/oder das linke Auge in dem Sichtfenster detektiert wurde. Auf diese Weise kann gegebenenfalls eine sehr große Fläche des virtuellen Bildes genutzt werden.

Gemäß einer weiteren vorteilhaften Ausgestaltung wird, falls genau ein Auge in dem Sichtfenster detektiert wird, zusätzlich die Position des detektierten Auges im Sichtfenster ermittelt und das Signalisierungssignal zusätzlich abhängig von der ermittelten Position des Auges erzeugt.

Durch die zusätzliche Ermittlung der Position ist es gegebenenfalls möglich, den Bereich sehr genau zu ermitteln, in dem Störungen auftreten können um diesen Bereich dann gegebenenfalls nicht für die Signalisierung zu nutzen. Auf diese Weise kann gegebenenfalls eine sehr große Fläche des virtuellen Bildes genutzt werden.

Gemäß einem zweiten Aspekt ist ein Beispiel nützlich,zur Verständnis der Erfindung offenbart, umfassend einerseits ein Verfahren und andererseits eine korrespondierende Vorrichtung zum Betreiben einer Anzeigevorrichtung eines Fahrzeugs. Die Anzeigevorrichtung weist eine Headup-Display-Einheit auf, mittels der ein Bild erzeugt wird, das aus einem vorgegebenen Sichtfenster auf einer Frontscheibe des Fahrzeugs für einen Fahrzeugführer als virtuelles Bild sichtbar ist. Zusätzlich weist die Anzeigevorrichtung mindestens eine Anzeigeeinheit auf, mittels der mindestens ein Anzeigeelement räumlich getrennt von der Headup-Display-Einheit signalisierbar ist. Es wird eine Anzahl von Augen eines Fahrzeugführers in dem vorgegebenen Sichtfenster detektiert. Falls kein Auge in dem Sichtfenster detektiert wird, so wird ermittelt, ob ein vorgegebenes Bildelement auf dem Bild erzeugt werden soll. Falls ermittelt wurde, dass ein vorgegebenes Bildelement erzeugt werden soll, so wird ermittelt, ob ein korrespondierendes Anzeigeelement signalisiert werden soll. Falls ermittelt wurde, dass ein korrespondierendes Anzeigeelement signalisiert werden soll, so wird mindestens ein Anzeigesignalisierungssignal derart erzeugt, dass das zu dem Bildelement korrespondierende Anzeigeelement mittels der Anzeige signalisiert wird.

Falls kein Auge des Fahrzeugführers in dem Sichtfenster detektiert wird, so ist es wahrscheinlich, dass der Fahrzeugführer das virtuelle Bild der Headup-Display-Einheit nicht wahrnimmt. Wird nun ermittelt, dass ein vorgegebenes Bildelement auf dem Bild der Headup-Display-Einheit erzeugt werden soll, so kann daraufhin ermittelt werden, ob ein korrespondierendes Anzeigeelement signalisiert werden soll. Bei den vorgegebenen Bildelementen kann es sich beispielsweise um Markierungen von Hindernissen oder um Warnhinweise oder andere Hinweise auf dem virtuellen Bild handeln. Da der Fahrzeugführer das virtuelle Bild wahrscheinlich nicht wahrnimmt, kann, falls ein wichtiges Bildelement angezeigt werden soll, ermittelt werden, dass ein korrespondierendes Anzeigeelement signalisiert werden soll. Indem nun ein Anzeigesignalisierungssignal erzeugt wird, damit ein Anzeigeelement mittels der Anzeige signalisiert wird, kann der Fahrzeugführer das Anzeigeelement gegebenenfalls wahrnehmen und so auf etwas hingewiesen werden, worauf er normalerweise mittels des Bildelements des virtuellen Bildes hingewiesen worden wäre. Auf diese Weise kann der Fahrzeugführer beispielsweise vor einer Gefahrensituation gewarnt werden.

Bei der Anzeigeeinheit kann es sich beispielsweise um ein Kombiinstrument und/oder um ein zentrales Anzeigedisplay handeln. In dem nun ermittelt wird, ob keine Augen im vorgegebenen Sichtfenster sind, kann in diesem Fall eine Signalisierung auf mindestens einem Anzeigeelement erfolgen, da der Fahrzeugführer das virtuelle Bild der Headup-Display-Einheit wahrscheinlich nicht wahrnehmen kann.

Gemäß einer vorteilhaften Ausgestaltung weist die Anzeigevorrichtung mindestens eine weitere Anzeigeeinheit auf. Abhängig von der ermittelten Blickrichtung wird für eine jeweilige Untermenge der Anzeigeeinheiten jeweils ein zugehöriges Anzeigesignalisierungssignal derart erzeugt, dass das zu dem Bildelement korrespondierende Anzeigeelement mittels der jeweils zugehörigen Anzeigeeinheit signalisiert wird.

Die Untermenge kann hierbei eine echte oder unechte Teilmenge der Anzeigeeinheiten darstellen. Indem zusätzlich die Blickrichtung des Fahrzeugführers ermittelt wird, kann diese für die Signalisierung von Anzeigeelementen genutzt werden. So kann beispielsweise das Anzeigeelement auf der Anzeigeeinheit signalisiert werden, die der Fahrzeugführer am wahrscheinlichsten wahrnimmt, da die Blickrichtung nahe an dieser Anzeigeeinheit ist.

Gemäß einer weiteren vorteilhaften Ausgestaltung wird ermittelt, ob sich ein vorgegebenes Objekt in einer Fahrzeugumgebung befindet. Falls ein vorgegebenes Objekt detektiert wurde, wird abhängig von der ermittelten Blickrichtung ermittelt, ob der Fahrzeugführer das Objekt wahrscheinlich nicht wahrnimmt. Falls ermittelt wurde, dass der Fahrzeugführer das Objekt wahrscheinlich nicht wahrnimmt, so wird für eine jeweilige Untermenge der Anzeigeeinheiten jeweils ein zugehöriges Anzeigesignalisierungssignal derart erzeugt, dass ein vorgegebener optischer Reiz erzeugt wird, damit der Fahrzeugführer das Objekt wahrscheinlich wahrnimmt. Die Untermenge kann hierbei eine echte oder unechte Teilmenge der Anzeigeeinheiten darstellen. Hierdurch kann für den Fahrzeugführer ein optischer Reiz erzeugt werden, der ihn vor dem detektierten Objekt warnt beziehungsweise der ihn dazu veranlasst, zu dem Objekt zu blicken. Der optische Reiz kann beispielsweise ein blinkendes Signal und/oder ein helles Signal sein. Indem die Blickrichtung genutzt wird, kann der optische Reiz beispielsweise auf der Anzeigeeinheit signalisiert werden, die der Fahrzeugführer am wahrscheinlichsten wahrnimmt.

Gemäß einer weiteren vorteilhaften Ausgestaltung wird ermittelt, ob sich ein vorgegebenes Objekt in der Fahrzeugumgebung befindet. Falls ein vorgegebenes Objekt detektiert wurde, wird abhängig von der ermittelten Blickrichtung ermittelt, ob der Fahrzeugführer das Objekt wahrscheinlich nicht wahrnimmt. Falls ermittelt wurde, dass der Fahrzeugführer das Objekt wahrscheinlich nicht wahrnimmt, so wird für eine jeweilige Untermenge der Anzeigeeinheiten jeweils ein zugehöriges Anzeigesignalisierungssignal derart erzeugt, dass ein zu dem Objekt korrespondierendes Anzeigeelement innerhalb der ermittelten Blickrichtung signalisiert wird.

Die Untermenge kann hierbei eine echte oder unechte Teilmenge der Anzeigeeinheiten darstellen. Hierdurch kann beispielsweise ein Warnhinweis oder ähnliches für den Fahrzeugführer signalisiert werden, der den Fahrzeugführer vor dem Objekt warnt. Indem die Blickrichtung genutzt wird, kann das Anzeigeelement beispielsweise auf der Anzeigeeinheit signalisiert werden, die der Fahrzeugführer am wahrscheinlichsten wahrnimmt.

Gemäß einer weiteren vorteilhaften Ausgestaltung weist die Anzeigevorrichtung mindestens eine weitere Anzeigeeinheit auf. Zusätzlich wird ein Wahrnehmungsfeld des Fahrzeugführers ermittelt, innerhalb dessen der Fahrzeugführer Objekte bewusst wahrnimmt. Abhängig von dem ermittelten Wahrnehmungsfeld wird für eine jeweilige Untermenge der Anzeigeeinheiten jeweils ein zugehöriges Anzeigesignalisierungssignal derart erzeugt, dass das zu dem Bildelement korrespondierende Anzeigeelement mittels der jeweils zugehörigen Anzeigeeinheit signalisiert wird.

Die Untermenge kann hierbei eine echte oder unechte Teilmenge der Anzeigeeinheiten darstellen. Das Wahrnehmungsfeld repräsentiert in diesem Zusammenhang einen Blickbereich des Fahrzeugführers, in dem er Objekte bewusst, beziehungsweise schnell wahrnehmen, beziehungsweise detektieren kann. Das Wahrnehmungsfeld kann beispielsweise abhängig von Kopfbewegungsfrequenzen und Kopfbewegungsamplituden ermittelt werden. Das Wahrnehmungsfeld repräsentiert in diesem Zusammenhang beispielsweise ein horizontales Blickfeld mit einer horizontalen Ausdehnung von ungefähr ±9° um die Blickrichtung des Fahrzeugführers. Alternativ oder zusätzlich repräsentiert das Wahrnehmungsfeld in diesem Zusammenhang ein vertikales Blickfeld mit einer vertikalen Ausdehnung von ungefähr ±25° um die Blickrichtung des Fahrzeugführers. Indem ein derartiges Wahrnehmungsfeld des Fahrzeugführers ermittelt wird, kann ermittelt werden, welche Anzeigeeinheit innerhalb des Wahrnehmungsfelds oder am nächsten zu dem Wahrnehmungsfeld liegt. Diese Anzeigeeinheit kann hieraufhin für die Signalisierung von einem Anzeigeelement genutzt werden.

Gemäß einer weiteren vorteilhaften Ausgestaltung wird ermittelt, ob sich ein vorgegebenes Objekt in der Fahrzeugumgebung befindet. Falls ein vorgegebenes Objekt detektiert wurde, wird abhängig von dem ermittelten Wahrnehmungsfeld ermittelt, ob der Fahrzeugführer das Objekt wahrscheinlich nicht wahrnimmt. Falls ermittelt wurde, dass der Fahrzeugführer das Objekt wahrscheinlich nicht wahrnimmt, so wird für eine jeweilige Untermenge der Anzeigeeinheiten jeweils ein zugehöriges Anzeigesignalisierungssignal derart erzeugt, dass ein vorgegebener optischer Reiz erzeugt wird, damit der Fahrzeugführer das Objekt wahrscheinlich wahrnimmt.

Die Untermenge kann hierbei eine echte oder unechte Teilmenge der Anzeigeeinheiten darstellen. Hierdurch kann für den Fahrzeugführer ein optischer Reiz erzeugt werden, der ihn vor dem detektierten Objekt warnt, beziehungsweise der ihn dazu veranlasst, zu dem Objekt zu blicken. Der optische Reiz kann beispielsweise ein blinkendes Signal und/oder ein helles Signal sein. Indem das ermittelte Wahrnehmungsfeld genutzt wird, kann der optische Reiz beispielsweise auf der Anzeigeeinheit signalisiert werden, die der Fahrzeugführer am wahrscheinlichsten wahrnimmt.

Gemäß einer weiteren vorteilhaften Ausgestaltung wird ermittelt, ob sich ein vorgegebenes Objekt in einer Fahrzeugumgebung findet. Falls ein vorgegebenes Objekt detektiert wurde, wird abhängig von dem ermittelten Wahrnehmungsfeld ermittelt, ob der Fahrzeugführer das Objekt wahrscheinlich nicht wahrnimmt. Falls ermittelt wurde, dass der Fahrzeugführer das Objekt wahrscheinlich nicht wahrnimmt, so wird für eine jeweilige Untermenge der Anzeigeeinheiten jeweils ein zugehöriges Anzeigesignalisierungssignal derart erzeugt, dass ein zu dem Objekt korrespondierendes Anzeigeelement innerhalb des ermittelten Wahrnehmungsfelds signalisiert wird.

Die Untermenge kann hierbei eine echte oder unechte Teilmenge der Anzeigeeinheiten darstellen. Hierdurch kann beispielsweise ein Warnhinweis oder ähnliches für den Fahrzeugführer signalisiert werden, der den Fahrzeugführer vor dem Objekt warnt. Indem das ermittelte Wahrnehmungsfeld genutzt wird, kann das Anzeigeelement beispielsweise auf der Anzeigeeinheit signalisiert werden, die der Fahrzeugführer am wahrscheinlichsten wahrnimmt.

Ausführungsbeispiele der Erfindung sind anhand der schematischen Zeichnungen näher erläutert. Es zeigen:
- Figur 1: ein Fahrzeug mit einer Headup-Display-Einheit,
- Figur 2: die Headup-Display-Einheit,
- Figur 3: eine Steuervorrichtung des Fahrzeugs und eine Anzeigevorrichtung des Fahrzeugs,
- Figur 4: ein Ablaufdiagramm zum Betreiben der Anzeigevorrichtung und
- Figur 5: ein virtuelles Bild.

Elemente gleicher Konstruktion oder Funktion sind figurenübergreifend mit den gleichen Bezugszeichen gekennzeichnet.

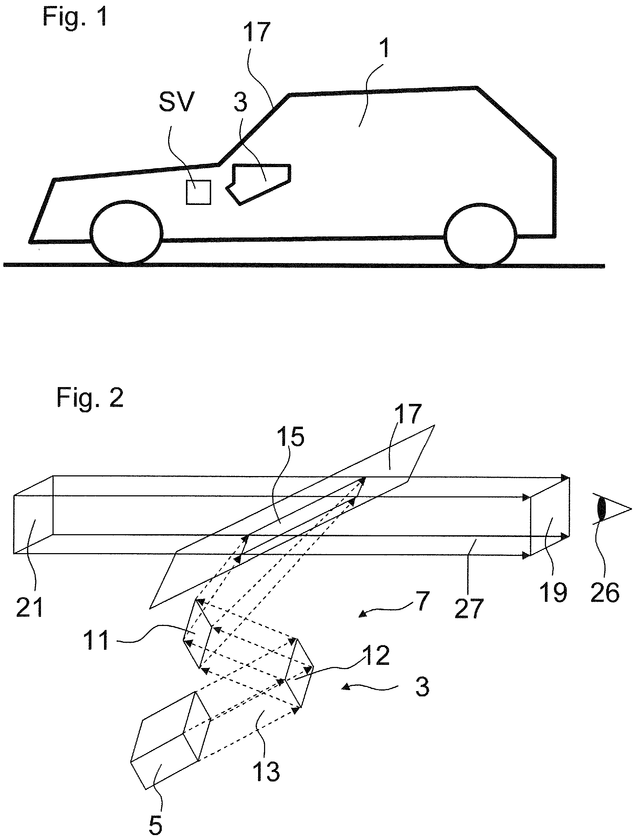

Figur 1 zeigt ein Fahrzeug 1 mit einer Headup-Display-Einheit 3. Die Headup-Display-Einheit 3 ist in dem Fahrzeug 1 unterhalb einer Frontscheibe 17 angeordnet. Das Fahrzeug 1 weist des Weiteren eine Steuervorrichtung SV auf.

Figur 2 zeigt die Headup-Display-Einheit 3. Die Headup-Display-Einheit 3 weist eine bilderzeugende Einheit 5 und ein optisches System 7 auf. Das optische System 7 weist eine oder mehrere Umlenkspiegel 12 sowie ein letztes optisches Element 11 auf. Das letzte optische Element 11 ist beispielsweise ein Spiegel, insbesondere ein abbildender Spiegel. Alternativ kann das letzte optische Element 11 eine Linse sein. Ein von der bilderzeugenden Einheit 5 erzeugtes Bild wird in das optische System 7 eingestrahlt und entlang eines optischen Strahlengangs 13 weitergeleitet. Der optische Strahlengang 13 des erzeugten Bildes trifft in einem Bereich 15 auf die Frontscheibe 17 auf. Auf diese Weise wird ein virtuelles Bild 21 erzeugt, das aus einem vorgegebenen Sichtfenster 19 für einen Fahrzeugführer beziehungsweise für ein Auge 26 des Fahrzeugführers sichtbar ist.

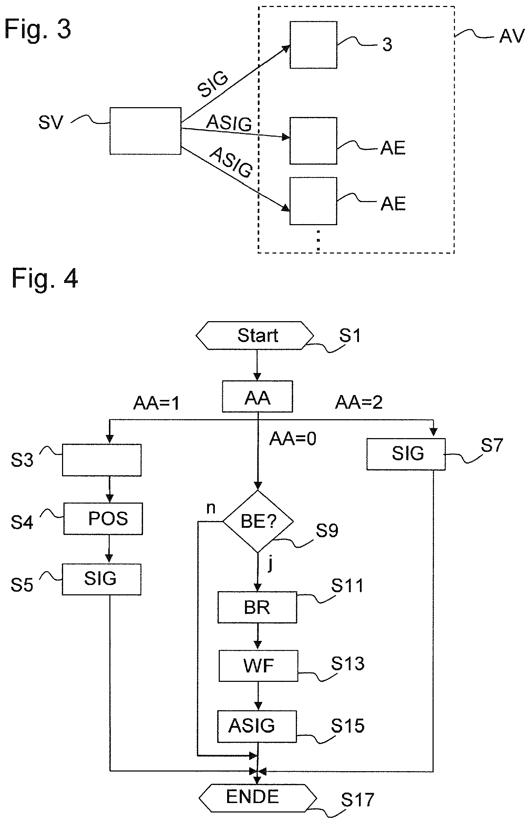

Figur 3 zeigt die Steuervorrichtung SV des Fahrzeugs 1. Die Steuervorrichtung SV weist eine Recheneinheit, einen Daten- und Programmspeicher, sowie mindestens eine Schnittstelle auf, mit der sie signaltechnisch gekoppelt ist mit einer Anzeigevorrichtung AV des Fahrzeugs 1. Die Steuervorrichtung SV ist mit der Anzeigevorrichtung AV gekoppelt zum Senden und Empfangen von Daten.

Die Steuervorrichtung SV kann auch als Vorrichtung zum Betreiben einer Anzeigevorrichtung bezeichnet werden.

Die Anzeigevorrichtung AV weist beispielsweise die Headup-Display-Einheit 3 des Fahrzeugs 1 auf. Die Anzeigevorrichtung AV weist beispielsweise zusätzlich ein oder mehrere Anzeigeeinheiten AE auf, mittels der oder mittels denen mindestens ein Anzeigeelement räumlich getrennt von der Headup-Display-Einheit 3 signalisierbar ist. Derartige Anzeigeeinheiten AE sind beispielsweise eine zentrale Anzeigeeinheit und/oder ein Kombi-Instrument. Die Steuervorrichtung SV ist derart mit der Headup-Display-Einheit 3 gekoppelt, dass sie ein Signalisierungssignal SIG zum Erzeugen des Bildes an die Headup-Display-Einheit 3, beziehungsweise an die bilderzeugende Einheit 5 senden kann. Mit der Anzeigeeinheit AE oder mit den Anzeigeeinheiten AE ist die Steuervorrichtung SV derart gekoppelt, dass sie jeweils ein Anzeigesignalisierungssignal ASIG an die jeweilige Anzeigeeinheit AE senden kann, zum Signalisieren eines Anzeigeelements mittels der jeweiligen Anzeigeeinheit AE.

Zum Betreiben der Headup-Display-Einheit 3 ist in dem Daten- und Programmspeicher der Steuervorrichtung SV bevorzugt zumindest ein Programm abgespeichert, das während des Betriebs der Anzeigevorrichtung AV abgearbeitet werden kann. Das Programm ist im Folgenden anhand des Ablaufdiagramms der Figur 4 näher erläutert.

Das Programm, das in der Steuervorrichtung SV abgearbeitet wird, wird in einem Schritt S1 gestartet, in dem gegebenenfalls Variablen initialisiert werden können.

In einem Schritt S3 wird eine Anzahl AA von Augen 26 des Fahrzeugführers in dem vorgegebenen Sichtfenster 19 detektiert. Die Anzahl AA von Augen 26 wird beispielsweise mittels einer Kamera detektiert, die das Gesicht und/oder die Augen 26 des Fahrzeugführers erfasst. Falls genau ein Auge 26 innerhalb des Sichtfensters 19 detektiert wurde, so wird das Programm in einem Schritt S3 fortgesetzt, falls zwei Augen 26 detektiert wurden, so wird das Programm in einem Schritt S7 fortgesetzt und falls kein Auge 26 detektiert wurde, so wird das Programm in einem Schritt S9 fortgesetzt.

In dem optionalen Schritt S3 wird zusätzlich ermittelt, ob das linke oder das rechte Auge 26 des Fahrzeugführers in dem Sichtfenster 19 detektiert wurde.

In einem optionalen Schritt S4 wird zusätzlich die Position POS des detektierten Auges 26 in dem Sichtfenster 19 ermittelt.

In einem Schritt S5 wird ein Signalisierungssignal SIG erzeugt zum Erzeugen des Bildes und zwar abhängig von der detektierten Anzahl AA von Augen 26 in dem Sichtfenster 19. Das Signalisierungssignal SIG kann alternativ oder zusätzlich abhängig von der Position POS des detektierten Auges 26 und/oder abhängig davon, welches Auge 26 in dem Sichtfenster 19 detektiert wurde, erzeugt werden.

In dem Schritt S7 wird ebenfalls ein Signalisierungssignal SIG erzeugt zum Erzeugen des Bildes und zwar abhängig von der detektierten Anzahl AA von Augen 26 in dem Sichtfenster 19.

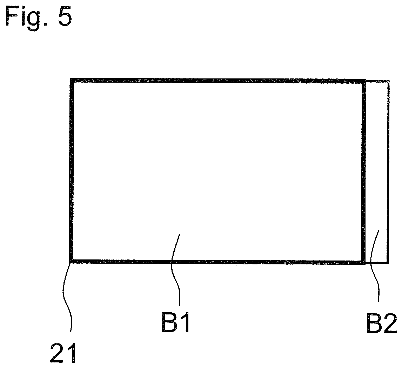

Der Unterschied der beiden Signalisierungssignale SIG des Schrittes S5 und S7 ist beispielhaft in der Figur 5 veranschaulicht. Falls nur ein Auge 26 innerhalb des Sichtfensters 19 liegt, so kann es beispielsweise zu Störungen in der Wahrnehmung des virtuellen Bildes 21 kommen. Diese Störungen treten beispielsweise in einem Bereich B2 auf. Werden beide Augen 26 des Fahrzeugführers in dem Sichtfenster 19 detektiert, so kann sowohl ein Bereich B1 als auch der Bereich B2 zur Signalisierung des virtuellen Bildes 21 genutzt werden. Wird nun nur ein Auge 26 detektiert, so kann beispielsweise nur der Bereich B1 genutzt werden, da in diesem Bereich beispielsweise keine Störungen auftreten. Der Bereich, in dem die Störungen auftreten können, ist abhängig davon, welches Auge 26 in dem Sichtfenster 19 liegt, beziehungsweise wo das Auge 26 in dem Sichtfenster 19 liegt. Deshalb kann die Position POS des detektierten Auges 26 und/oder die Ermittlung, ob das linke oder das rechte Auge 26 innerhalb des Sichtfensters 19 liegt, zusätzlich zum Erzeugen des Signalisierungssignals SIG genutzt werden um den Bereich, in dem es zu Störungen kommen kann, sehr genau berücksichtigen zu können.

In dem Schritt S9 wird, falls kein Auge 26 detektiert wurde, ermittelt, ob ein vorgegebenes Bildelement BE auf dem Bild erzeugt werden soll. Derartige vorgegebene Bildelemente BE sind beispielsweise kontaktanaloge Markierungen und/oder Warnhinweise und/oder andere Hinweise für den Fahrzeugführer. Wird ermittelt, dass kein Bildelement BE erzeugt werden soll, so wird das Programm in einem Schritt S17 fortgesetzt. Wird ermittelt, dass ein Bildelement BE erzeugt werden soll, so wird zusätzlich ermittelt, ob ein zu dem Bildelement BE korrespondierendes Anzeigeelement erzeugt werden soll. Dies kann beispielsweise dann der Fall sein, falls wichtige oder vorgegebene Bildelemente BE, wie Warnhinweise erzeugt werden sollen. Wird ermittelt, dass kein korrespondierendes Anzeigeelement erzeugt werden soll, so wird das Programm in dem Schritt S17 fortgesetzt. Wird ermittelt, dass ein korrespondierendes Anzeigeelement erzeugt werden soll, so wird das Programm in einem Schritt S11 fortgesetzt.

In dem optionalen Schritt S11 wird zusätzlich eine Blickrichtung BR des Fahrzeugführers ermittelt. Die Blickrichtung BR kann beispielsweise mittels einer Kamera ermittelt werden, die ein Auge 26 oder beide Augen 26 des Fahrzeugführers erfasst.

In dem optionalen Schritt S13 wird ein Wahrnehmungsfeld WF des Fahrzeugführers ermittelt. Das Wahrnehmungsfeld WF repräsentiert in diesem Zusammenhang einen Blickbereich des Fahrzeugführers, in dem er Objekte bewusst, beziehungsweise schnell wahrnehmen, beziehungsweise detektieren kann. Das Wahrnehmungsfeld WF wird beispielsweise mittels einer Kamera, die das Gesicht oder den Kopf des Fahrzeugführers erfasst, ermittelt. Das Wahrnehmungsfeld WF wird beispielsweise abhängig von einer Kopfbewegungsfrequenz und/oder einer Kopfbewegungsamplitude ermittelt.

In einem Schritt S15 wird ein Anzeigesignalisierungssignal ASIG erzeugt, sodass ein zu dem Bildelement BE korrespondierendes Anzeigeelement und oder ein optischer Reiz mittels der jeweils zugehörigen Anzeigeeinheit AE signalisiert wird. Falls das Fahrzeug 1 mehrere Anzeigeeinheiten AE aufweist, so kann für eine jeweilige Untermenge der Anzeigeeinheiten AE jeweils ein zugehöriges Anzeigesignalisierungssignal ASIG derart erzeugt werden, dass das zu dem Bildelement BE korrespondierende Anzeigeelement und/oder der optischer Reiz mittels der jeweils zugehörigen Anzeigeeinheit AE signalisiert wird. Die Untermenge kann beispielsweise alternativ oder zusätzlich abhängig von der ermittelten Blickrichtung BR und/oder abhängig von dem ermittelten Wahrnehmungsfeld WF ermittelt werden, sodass der Fahrzeugführer das Anzeigeelement und/oder den optischen Reiz gegebenenfalls wahrnimmt, wobei die Untermenge eine echte oder unechte Teilmenge der Anzeigeeinheiten AE darstellen kann. Der optische Reiz ist beispielsweise ein helles Signal und/oder ein blinkendes Signal.

Alternativ oder zusätzlich kann in dem Schritt S15 ermittelt werden, ob sich ein vorgegebenes Objekt in einer Fahrzeugumgebung befindet und falls ein vorgegebenes Objekt detektiert wurde, abhängig von der ermittelten Blickrichtung BR und/oder abhängig von dem ermittelten Wahrnehmungsfeld WF ermittelt werden, ob der Fahrzeugführer das Objekt wahrscheinlich nicht wahrnimmt. Falls ermittelt wurde, dass der Fahrzeugführer das Objekt wahrscheinlich nicht wahrnimmt, so kann für eine jeweilige Untermenge der Anzeigeeinheiten AE jeweils das zugehörige Anzeigesignalisierungssignal ASIG derart erzeugt werden, dass ein vorgegebener optischer Reiz und oder ein Anzeigelement erzeugt wird, damit der Fahrzeugführer das Objekt wahrscheinlich wahrnimmt beziehungsweise damit er davor gewarnt wird, wobei die Untermenge eine echte oder unechte Teilmenge der Anzeigeeinheiten AE darstellen kann. Der optische Reiz ist beispielsweise ein helles Anzeigeelement und/oder ein blinkendes Signal.

Nach den Schritten S5, S7 und S15 wird das Programm in dem Schritt S17 fortgesetzt. In dem Schritt S17 wird das Programm beendet und kann gegebenenfalls wieder in dem Schritt S1 gestartet werden.

Die Schritte S3 bis S5, beziehungsweise der Schritt S7, beziehungsweise die Schritte S9 bis S15 können in Kombination mit den Schritten S1, S3 und S17 jeweils auch als eigenes Programm gespeichert sein und getrennt voneinander ausgeführt werden.

### Bezugszeichenliste

- 1: Fahrzeug
- 3: Headup-Display-Einheit
- 5: bilderzeugende Einheit
- 7: optisches System
- 11: letztes optisches Element
- 12: Umlenkspiegel
- 13: optischer Strahlengang des erzeugten Bildes
- 15: Bereich auf Frontscheibe
- 17: Frontscheibe
- 19: Sichtfenster
- 21: virtuelles Bild
- 26: Auge
- AA: Anzahl
- AE: Anzeigeeinheit
- ASIG: Anzeigesignalisierungssignal
- AV: Anzeigevorrichtung
- BE: Bildelement
- BR: Blickrichtung
- SIG: Signalisierungssignal
- SV: Steuervorrichtung
- WF: Wahrnehmungsfeld

## Patentansprüche

1. Verfahren zum Betreiben einer Anzeigevorrichtung (AV) eines Fahrzeugs (1), die eine Headup-Display-Einheit (3) aufweist, wobei die Headup-Display-Einheit (3) eine bilderzeugende Einheit (5) und ein optisches System (7) aufweist, wobei mittels der bilderzeugenden Einheit (5) ein Bild erzeugt wird und in das optische System (7) eingestrahlt und entlang eines optischen Strahlengangs (13) weitergeleitet wird und der optische Strahlengang (13) des erzeugten Bildes in einem Bereich (15) auf die Frontscheibe (17) auftrifft, so dass ein virtuelles Bild (21) erzeugt wird, das aus einem vorgegebenen Sichtfenster (19) für einen Fahrzeugführer sichtbar ist, bei dem
- eine Anzahl (AA) von Augen (26) des Fahrzeugführers in dem vorgegebenen Sichtfenster (19) detektiert wird,
- falls die Anzahl (AA) von detektierten Augen eins oder zwei ist, abhängig von der detektierten Anzahl (AA) von Augen (26) ein Signalisierungssignal (SIG) erzeugt wird zum Erzeugen des Bildes, bei dem, falls genau ein Auge (26) in dem Sichtfenster (19) detektiert wird, das Signalisierungssignal (SIG) derart erzeugt wird, dass eine Höhe und/oder Breite des erzeugten Bildes kleiner ist als bei einem Detektieren von zwei Augen (26) in dem Sichtfenster (19).

2. Verfahren nach Anspruch 1,
bei dem, falls genau ein Auge (26) in dem Sichtfenster (19) detektiert wird, zusätzlich ermittelt wird, ob das linke oder das rechte Auge (26) detektiert wurde und das Signalisierungssignal (SIG) zusätzlich abhängig davon erzeugt wird, ob das linke oder das rechte Auge (26) detektiert wurde.

3. Verfahren nach einem der vorhergehenden Ansprüche, bei dem, falls genau ein Auge (26) in dem Sichtfenster (19) detektiert wird, zusätzlich die Position (POS) des detektierten Auges (26) im Sichtfenster (19) ermittelt wird und das Signalisierungssignal (SIG) zusätzlich abhängig von der ermittelten Position (POS) des Auges (26) erzeugt wird.

4. Vorrichtung zum Betreiben einer Anzeigevorrichtung (AV) eines Fahrzeugs (1), aufweisend eine Recheneinheit, einen Daten- und Programmspeicher, eine Kamera und mindestens eine Schnittstelle, die signaltechnisch mit der Anzeigevorrichtung (AV) koppelbar ist, wobei die Vorrichtung dazu ausgebildet ist, ein Verfahren nach einem der Ansprüche 1 bis 3 auszuführen, wobei die Anzeigevorrichtung (AV) eine Headup-Display-Einheit (3) aufweist und die Headup-Display-Einheit (3) eine bilderzeugende Einheit (5) und ein optisches System (7) aufweist, wobei die bilderzeugende Einheit (5) dazu ausgebildet ist ein Bild zu erzeugen das optische System (7) einzustrahlen, wobei das optische System dazu ausgebildet ist das Bild entlang eines optischen Strahlengangs (13) weiterzuleiten, so dass der optische Strahlengang (13) des erzeugten Bildes in einem Bereich (15) auf die Frontscheibe (17) auftrifft, so dass ein virtuelles Bild (21) erzeugt wird, das aus einem vorgegebenen Sichtfenster (19) für einen Fahrzeugführer sichtbar ist.

## Claims

1. A method for operating a display device (AV) of a vehicle (1), which display device comprises a head-up display unit (3), wherein the head-up display unit (3) comprises an image-generating unit (5) and an optical system (7), wherein an image is generated by means of the image-generating unit (5) and is irradiated into the optical system (7) and is forwarded along an optical beam path (13), and the optical beam path (13) of the generated image impinges in a region (15) on the windscreen (17), such that a virtual image (21) is generated which is visible to the vehicle driver from a predefined viewing window (19), in which method
- a number (AA) of eyes (26) of the vehicle driver in the predefined viewing window (19) is detected,
- if the number (AA) of detected eyes is one or two, a signalling signal (SIG) is generated, depending on the detected number (AA), in order to generate the image,
in which method, if exactly one eye (26) is detected in the viewing window (19), the signalling signal (SIG) is generated in such a way that a height and/or width of the generated image is smaller than when two eyes (26) are detected in the viewing window (19).

2. A method according to claim 1,
in which, if exactly one eye (26) is detected in the viewing window (19), it is additionally determined whether the left or the right eye (26) has been detected, and the signalling signal (SIG) is additionally generated depending on whether the left or the right eye (26) has been detected.

3. A method according to either one of the preceding claims, in which, if exactly one eye (26) is detected in the viewing window (19), the position (POS) of the detected eye (26) in the viewing window (19) is additionally determined and the signalling signal (SIG) is additionally generated depending on the determined position (POS) of the eye (26).

4. A device for operating a display device (AV) of a vehicle (1), comprising a computing unit, a data and program memory, a camera, and at least one interface, which can be coupled to the display device (AV) for signal exchange, wherein the device is designed to carry out a method according to any one of claims 1 to 3, wherein the display device (AV) comprises a head-up display unit (3) and the head-up display unit (3) comprises an image-generating unit (5) and an optical system (7), wherein the image-generating unit (5) is designed to generate an image and to irradiate it unto the optical system (7), wherein the optical system is designed to forward the image along an optical beam path (13), such that the optical beam path (13) of the generated image impinges in a region (15) on the windscreen (17), such that a virtual image (21) is generated, which is visible to the vehicle driver from a predefined viewing window (19).

## Revendications

1. Procédé permettant de faire fonctionner un dispositif d'affichage (AV) d'un véhicule (1) qui comporte une unité d'affichage tête haute (3), cette unité d'affichage tête haute (3) comportant une unité de création d'images (5) et un système optique (7), l'unité de création d'images (5) permettant d'obtenir une image de l'introduire dans le système optique (7) et de la transmettre le long d'un chemin optique (13), et le chemin optique (13) de l'image créée venant frapper une zone (15) située sur le pare-brise (17) de façon à obtenir une image virtuelle (21) qui est visible dans une fenêtre de vision (19) prédéfinie par le conducteur du véhicule,
procédé selon lequel
un nombre (AA) d'yeux (26) du conducteur du véhicule est détecté dans la fenêtre de vision (19) prédéfinie,
si le nombre (AA) d'yeux détectés est égal à un ou deux, en fonction du nombre (AA) d'yeux (26) ainsi détecté, un signal de signalisation (SIG) est produit pour obtenir l'image,
dans le cas où un seul oeil (26) est détecté dans la fenêtre de vision (19), le signal de signalisation (SIG) est produit de sorte que la hauteur et/ou la largeur de l'image créée soit inférieure à leur hauteur et/ou leur largeur dans le cas de la détection de deux yeux (26) dans la fenêtre de vision (19).

2. Procédé conforme à la revendication 1,
selon lequel lorsqu'un seul oeil (26) est détecté dans la fenêtre de vision (19), on détermine en outre si l'oeil gauche ou l'oeil droit (26) a été détecté et le signal de signalisation (SIG) est en outre produit en fonction de la détection de l'oeil gauche ou de l'oeil droit (26).

3. Procédé conforme à l'une des revendications précédentes,
selon lequel lorsqu'un seul oeil (26) est détecté dans la fenêtre de vision (19), la position (POS) de l'oeil détecté (26) dans la fenêtre de vision (19) est en outre déterminée, et le signal de signalisation (SIG) est en outre produit en fonction de la position (POS) déterminée de l'oeil (26).

4. Dispositif permettant de faire fonctionner un dispositif d'affichage (AV) d'un véhicule (1) comprenant une unité de calcul, une mémoire de données et de programme, une caméra et au moins une interface qui peut être couplée par la technique des signaux avec le dispositif d'affichage (AV), ce dispositif étant réalisé pour permettre la mise en oeuvre du procédé conforme à l'une des revendications 1 à 3, dans lequel le dispositif d'affichage (AV) comporte une unité d'affichage tête haute (3) et cette unité d'affichage tête haute (3) comporte une unité de création d'images (5) et un système optique (7), l'unité de création d'images (5) étant réalisée pour permettre de créer une image et de l'introduire dans le système optique (7), le système optique étant réalisé pour transmettre l'image le long d'un chemin optique (13) de sorte que le chemin optique (13) de l'image créée vienne frapper une zone (15) située sur le pare-brise (17), de façon à obtenir une image virtuelle (21) qui est visible par le conducteur du véhicule dans une fenêtre de vision (19) prédéfinie.
